(19) Europäisches Patentamt / European Patent Office / Office européen des brevets

(11) EP 4 691 982 A1

(12) **EUROPEAN PATENT APPLICATION**
published in accordance with Art. 153(4) EPC

(43) Date of publication:
**11.02.2026 Bulletin 2026/07**

(21) Application number: **24779646.9**

(22) Date of filing: **18.03.2024**

(51) International Patent Classification (IPC):
***C01B 33/18*** *(2006.01)*

(52) Cooperative Patent Classification (CPC):
**C01B 33/18**

(86) International application number:
**PCT/JP2024/010485**

(87) International publication number:
**WO 2024/203521 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023049424**

(71) Applicant: **TOKUYAMA CORPORATION**
**Yamaguchi 745-8648 (JP)**

(72) Inventors:
- **TANIGUCHI, Takashi**
  **Shunan-shi, Yamaguchi 745-8648 (JP)**
- **SANDO, Mitsuyoshi**
  **Shunan-shi, Yamaguchi 745-8648 (JP)**
- **FUKUJU, Tadahiro**
  **Shunan-shi, Yamaguchi 745-8648 (JP)**

(74) Representative: **Mewburn Ellis LLP**
**Aurora Building**
**Counterslip**
**Bristol BS1 6BX (GB)**

# (54) METHOD FOR PRODUCING HYDROPHOBIC SILICA POWDER AND HYDROPHOBIZING AGENT

(57) Provided is a method for producing a hydrophobic silica powder with a siloxane-based hydrophobization agent in a liquid phase, which has conventionally been extremely low in reactivity as compared with hexamethyldisilazane or trimethylchlorosilane and has required a long time for the hydrophobization treatment, the method being capable of reducing the time required for the hydrophobization treatment into a short time. The method for producing a hydrophobic silica powder includes hydrophobizing a silica powder using a mixed solution consisting of concentrated sulfuric acid and a siloxane-based hydrophobization agent as a hydrophobization treatment agent.

EP 4 691 982 A1

## Description

### TECHNICAL FIELD

The present invention relates to a method for producing a hydrophobic silica powder, the method including hydrophobizing a silica powder using a mixed solution consisting of concentrated sulfuric acid and a siloxane-based hydrophobization agent.

### BACKGROUND ART

Silica powders are used as thickeners for silicone rubbers, resins, and the like, and fluidizers for various inorganic and organic powders such as reinforcing fillers and toners. For these applications, a hydrophobic silica powder having a silica powder surface subjected to a hydrophobization treatment may be suitable. The hydrophobization treatment is also performed for reducing aggregation of particles caused by surface silanol groups generated at the time of drying of wet silica obtained by a liquid phase method and improving water resistance.

A hydrophobization treatment step is also used as one of the steps of producing a silica aerogel which is a type of silica. Normally, when a wet gel is dried, drying shrinkage occurs because of capillary tension caused by surface tension of a solvent or dehydration condensation of a surface silanol, and it is difficult to obtain an aerogel. A silica aerogel is obtained by performing supercritical drying to dry a wet gel under conditions where surface tension does not act on the wet gel. However, supercritical drying is required to have a high pressure and a high temperature, and thus is not desirable from an economic point of view. As a method for obtaining a silica aerogel powder without supercritical drying, hydrophobization of a wet gel surface is effective. The substitution of the inside of hydrophobized pores with a solvent having a low surface tension makes it possible to suppress pore shrinkage under drying at a temperature lower than the critical point. Thus, a silica aerogel powder can be obtained.

Patent Document 1 discloses a method for producing a spherical silica aerogel, the method including: a step of preparing an aqueous silica sol; a step of dispersing the aqueous silica sol in a hydrophobic solvent to form a W/O emulsion; a step of gelling the silica sol to convert the W/O emulsion into a dispersion of a gelled body; a step of substituting moisture in the gelled body with a solvent having a surface tension of 30 mN/m or less at 20°C; a step of subjecting the gelled body to a hydrophobization treatment with a hydrophobization agent; and a step of removing the substituted solvent in this order.

Patent Document 2 discloses a method for producing a spherical silica aerogel, the method including: a step of separating the dispersion of a gelled body obtained in the step of converting the W/O emulsion into a dispersion of a gelled body into two layers of an O phase and a W phase; a step of adding a basic substance to the W phase to age the gelled body dispersed in the W phase; a step of subjecting the gelled body dispersed in the W phase to a silylation treatment (hydrophobization treatment); a step of extracting the gelled body with a hydrophobic organic solvent; and a step of recovering the gelled body to obtain a powder composed of a hydrophobic and spherical silica aerogel in this order.

### PRIOR ART DOCUMENTS

### PATENT DOCUMENTS

Patent Document 1: WO 2012/057086 A
Patent Document 2: JP 2018-177620 A

### SUMMARY OF THE INVENTION

### PROBLEMS TO BE SOLVED BY THE INVENTION

In the hydrophobization treatment of silica powder, siloxane-based hydrophobization agents such as hexamethyldisiloxane and octamethylcyclotetrasiloxane are widely used, but when these are used in a liquid phase, reactivity is extremely lower than that of hexamethyldisilazane or trimethylchlorosilane. Thus, in the hydrophobization treatment of silica powder with a siloxane-based hydrophobization agent, the reactivity is improved through an addition of a catalyst such as an acid or a base or through contact of a siloxane-based hydrophobization agent in a mixed solvent of water and a hydrophilic organic solvent. However, in Patent Document 2, it takes 12 hours as the hydrophobization treatment time, and it is desired to further shorten the hydrophobization treatment time from the viewpoint of shortening the production time.

MEANS FOR SOLVING THE PROBLEMS

As a result of intensive studies to solve the above problems, the inventors of the present invention have obtained a finding that in a method for producing a hydrophobic silica powder, when a hydrophobization treatment is performed by bringing a silica powder into contact with a siloxane-based hydrophobization agent in a mixed solvent of water and a hydrophilic organic solvent, a reaction of a siloxane bond of the siloxane-based hydrophobization agent being cleaved affects the hydrophobization treatment time.

As a result of further studies based on the finding, the inventors of the present invention have found that, in a hydrophobization treatment performed by adding a hydrophobization agent and an acid catalyst to a mixed solvent of water and a hydrophilic organic solvent in which silica is dispersed, the hydrophobization treatment reaction is promoted by mixing a siloxane-based hydrophobization agent and concentrated sulfuric acid to form a mixed solution in advance before they are added to the mixed solvent, and then adding the mixed solution to the mixed solvent of water and a hydrophilic organic solvent in which silica is dispersed. The present invention thus has been completed.

That is, a first aspect of the present invention is a method for producing a hydrophobic silica powder, the method including hydrophobizing a silica powder using a mixed solution consisting of concentrated sulfuric acid and a siloxane-based hydrophobization agent. The concentrated sulfuric acid preferably has a mass of 1.5 times to 10 times the mass of the siloxane-based hydrophobization agent.

A second aspect of the present invention is a hydrophobization treatment agent including concentrated sulfuric acid and a siloxane-based hydrophobization agent.

EFFECTS OF THE INVENTION

The method for producing a hydrophobic silica powder of the present invention accelerates the speed of the hydrophobization treatment using a siloxane-based hydrophobization agent. Thus, the production time for the hydrophobic silica powder can be shortened.

MODE FOR CARRYING OUT THE INVENTION

In the method for producing a hydrophobic silica powder of the present invention, a silica powder is hydrophobized by using a mixed solution of concentrated sulfuric acid and a siloxane-based hydrophobization agent.

<Raw Silica Powder>

As the raw silica powder which is the silica powder before being treated, a silica powder obtained by a known method is used without particular limitation. Typical examples thereof include dry silica, wet silica, and sol-gel processed silica. These silicas may be partially or entirely fused silica powder. The raw silica powder also includes wet silica and wet gel obtained at the final stage of the production process of the sol-gel processed silica. The raw silica powder may be in the state of a dispersion.

The dry silica is generally obtained by burning a silicon compound such as silicon tetrachloride in an oxyhydrogen flame. In general, it is also referred to as fumed silica. As the dry silica, silica having a specific surface area in the range of approximately 50 to 500 $m^2/g$ is obtained by changing the production conditions. The primary particle size of silica calculated from the specific surface area is in the range of about 5 to 200 nm, but silica is normally present as an aggregate of 1 $\mu m$ or more.

Typical examples of the wet silica include precipitated silica that has precipitated in a solution by neutralizing sodium silicate with a mineral acid. In general, it is also referred to as white carbon.

Gel silica produced by neutralizing sodium silicate with an acid in the same manner is also a type of wet silica. A product obtained by pulverizing the gel silica can be used as the raw silica powder of the present invention.

Various silicas are obtained as the wet silica by changing the production conditions. The wet silica has a specific surface area in the range of approximately 50 to 1000 $m^2/g$. The wet silica is considered to be aggregated particles in which fine particles having a primary particle size of about 3 to 50 nm are aggregated in the middle of synthesis depending on its production method. These wet silicas are normally filtered or washed after a neutralization reaction, dried, and then pulverized as necessary to obtain powder. In general, the average particle size of available wet silica particles is 1 to several 100 $\mu m$.

The sol-gel processed silica is obtained by hydrolyzing an alkoxide of silicon such as tetramethoxysilane or tetraethoxysilane in an acidic or alkaline water-containing organic solvent. The alkoxide of silicon is expensive, but has a feature that extremely high purity silica can be obtained because the raw material can be highly purified by distillation. When the hydrolysis is performed in an acidic or alkaline concentrated solution, bulk silica is obtained, and by pulverizing the silica, amorphous silica particles of 1 to several 100 $\mu m$ are obtained.

As the sol-gel processed silica, so-called silica-based composite oxides such as silica-titania, silica-alumina, and silica-zirconia oxides can also be used as the raw silica powder of the hydrophobic silica powder of the present invention. These are obtained by co-hydrolyzing an alkoxide of silicon and a metal alkoxide such as titanium alkoxide, aluminum alkoxide, or zirconium alkoxide. These silica-based composite oxides can exhibit useful characteristics that normal silica does not have because of the chemical and physical properties of the metal oxide other than silicon to be used. For example, the refractive index of the silica-based composite oxide can be adjusted by changing the content of the metal oxide.

In the present invention, the raw silica powder may be selected and used from suitable silica and particle size (specific surface area) according to the application from among the above-described types.

<Mixed Solution Consisting of Concentrated Sulfuric Acid and Siloxane-Based Hydrophobization Agent>

In the method for producing a hydrophobic silica powder of the present invention, a mixed solution consisting of concentrated sulfuric acid and a siloxane-based hydrophobization agent is used as a hydrophobization treatment agent.

As the concentrated sulfuric acid, one having a concentration of 90 to 100% can be used, and the concentration is preferably 95% or more. When the sulfuric acid concentration is less than 90%, the sulfuric acid and the siloxane-based hydrophobization agent are not mixed, the cleavage reaction of the siloxane bond described later is not promoted, and improvement in the speed of the hydrophobization treatment cannot be expected.

As the siloxane-based hydrophobization agent, a compound having a siloxane bond in the molecule can be used. As the siloxane-based hydrophobization agent, compounds represented by General Formulas (1) and (2) shown below are known.

[Chemical Formula 1]

$$RR'_2SiO\text{-}(SiRR'O)_n\text{-}SiRR'_2 \qquad (1)$$

[In Formula (1), n represents an integer of 0 or more; R represents a hydrophobic group such as a hydrocarbon group; and R' represents hydrogen or a hydrocarbon group. A plurality of R and R' may be the same or different.]

[Chemical Formula 2]

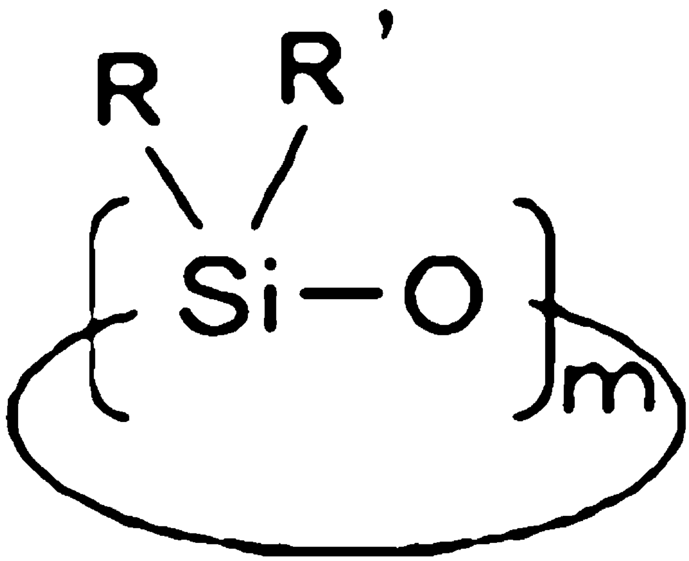

(2)

[In Formula (2), m represents an integer of 3 to 10; R represents a hydrophobic group such as a hydrocarbon group; and R' represents hydrogen or a hydrocarbon group. A plurality of R and R' may be the same or different.]

In Formula (1), n is preferably an integer of 0 to 8. R and R' are preferably a hydrocarbon group, more preferably a hydrocarbon group having 1 to 10 carbon atoms, still more preferably a hydrocarbon group having 1 to 4 carbon atoms, and particularly preferably a methyl group.

When the silica powder is treated with the siloxane-based hydrophobization agent represented by Formula (1), the number of bound hydroxy groups on the surface of the silica powder varies depending on the n number in Formula (1). For example, when n is 0, a bond of:

$\equiv$M-O-SiRR'$_2$ (3)

[In Formula (3), M represents a Si atom forming the silica powder (the same applies in the all of the following formulas).] occurs.

When n is 1 or more, bonds of Formula (3) and

($\equiv$M-O-)$_2$SiRR' (4)

occur. By silylating the hydroxy groups in this manner, a hydrophobization treatment is performed.

Specific examples of the hydrophobization agent represented by Formula (1) include dimethylpolysiloxanes such as hexamethyldisiloxane, octamethyltrisiloxane, decamethyltetrasiloxane, dodecamethylpentasiloxane, and tetradecamethylhexasiloxane, and methylphenyl silicone oil. From the viewpoint of having good reactivity, hexamethyldisiloxane and octamethyltrisiloxane are preferable, and hexamethyldisiloxane is more preferable.

In Formula (2), m is an integer of 3 to 10, and preferably m is an integer of 3 to 5. R and R' are preferably hydrocarbon groups, and examples of the preferable group include groups similar to R and R' in Formula (1). When the silica powder is treated with the compound represented by Formula (2) (hereinafter, also referred to as cyclic siloxane), the bond represented by Formula (4) occurs on the silica surface in the gelled body.

Specific examples of the cyclic siloxane represented by Formula (2) include hexamethylcyclotrisiloxane, octamethylcyclotetrasiloxane, decamethylcyclopentasiloxane, dodecamethylcyclohexasiloxane, tetradecamethylcycloheptasiloxane, hexadecamethylcyclooctasiloxane, octadecamethylcyclononasiloxane, and eicosamethylcyclodecasiloxane. From the viewpoint of having good reactivity, hexamethylcyclotrisiloxane, octamethylcyclotetrasiloxane, and decamethylcyclopentasiloxane are preferable, and octamethylcyclotetrasiloxane is more preferable.

<Method for Preparing Mixed Solution Consisting of Concentrated Sulfuric Acid and Siloxane-Based Hydrophobization Agent>

The mixed solution consisting of concentrated sulfuric acid and a siloxane-based hydrophobization agent is obtained by mixing concentrated sulfuric acid and a siloxane-based hydrophobization agent.

It is considered that the siloxane-based hydrophobization agent listed as Formula (1) or (2) is easily mixed with sulfuric acid to produce a sulfosilyl ester represented by Formula (5) or (6) in the mixed solution.

RR'$_2$Si-OSO$_3$H (5)

RR'Si-(OSO$_3$H)$_2$ (6)

[In Formulas (5) and (6), R represents a hydrophobic group such as a hydrocarbon group; and R' is hydrogen or a hydrocarbon group, and a plurality of R and R' may be the same or different.]

The sulfuric acid group in Formulas (5) and (6) has high leaving ability and easily mixes and reacts with water to form a silanol group. It is considered that hydrophobization proceeds because of dehydration condensation of the silanol group with the silanol group of the raw silica. It is considered that the hydrophobization reaction can be accelerated because the formation of the silanol group is promoted by mixing the concentrated sulfuric acid with the siloxane-based hydrophobization agent.

The amount of the siloxane-based hydrophobization agent to be used depends on the type of the siloxane-based hydrophobization agent. For example, when the hydrophobization treatment is performed with hexamethyldisiloxane, the amount of hexamethyldisiloxane is preferably 0.03 A to 0.15 A parts by mass (where A is the specific surface area ($m^2$/g) of the raw silica) with respect to 100 parts by mass of the raw silica. The amount is more preferably 0.04 A to 0.13 A parts by mass. When it is desired to adjust the residual silanol group of silica after hydrophobization, an amount smaller than the above range may be used.

The amount of concentrated sulfuric acid with respect to the amount of the siloxane-based hydrophobization agent depends on the type of the hydrophobization agent. When hexamethyldisiloxane or octamethylcyclotetrasiloxane is used, it is desirable to use concentrated sulfuric acid having a mass of 1.5 times to 10 times the mass of the siloxane-based hydrophobization agent to be used. When the amount of sulfuric acid to be used is 1.5 times or more the mass of the hydrophobization agent, the siloxane-based hydrophobization agent and the concentrated sulfuric acid form a uniform mixed solution, and thus the promotion of the hydrophobization treatment reaction can be expected. This is considered to be because the production of the sulfuric acid silyl ester sufficiently proceeds. When the amount of sulfuric acid is 10 times or less the mass of the hydrophobization agent, there is no possibility that the hydrophilic organic solvent described later reacts with the sulfuric acid. The end point of the mixing depends on the hydrophobization agent and the stirring efficiency,

but it is preferable to set the point at which the heat generation due to the mixing is settled as the end point. For example, when 46 g of concentrated sulfuric acid and 8 g of hexamethyldisiloxane or octamethyltetrasiloxane are used, the heat generation is settled in about 5 minutes, and the liquid temperature of the mixed solution does not increase.

<Hydrophobization Treatment>

In the present invention, the hydrophobization treatment can be performed by adding a mixed solution consisting of concentrated sulfuric acid and a siloxane-based hydrophobization agent prepared by the method described in the preceding section to a slurry in which raw silica is dispersed in a solution consisting of a hydrophilic organic solvent and water, and stirring the solution at a predetermined temperature for a certain period of time.

The slurry is prepared by adding the raw silica to an aqueous solution containing a hydrophilic organic solvent, or conversely, by adding the aqueous solution to the raw silica. This can be performed by a known method. The silica concentration in the slurry is preferably 2 to 30 mass%, more preferably 4 to 20 mass%.

The concentration of the hydrophilic organic solvent in the aqueous solution is preferably in the range of 15 to 80 wt% from the viewpoint of enhancing the solubility of the hydrophobization agent in the aqueous solution to promote reactivity. When the final stage in the process of producing the raw silica itself is an aqueous solution containing a hydrophilic organic solvent, it can also be treated as the slurry. Any type of the hydrophilic organic solvent can be used, but it is preferable to use a low-boiling-point solvent that can be easily distilled off after hydrophobization. Examples thereof include acetone, methanol, ethanol, and isopropyl alcohol. Among these, isopropyl alcohol can be suitably used.

The pH of the reaction solution is preferably set to 0 to 1.0 to increase the efficiency of the hydrophobization reaction and shorten the reaction time. The pH in this range can be adjusted with sulfuric acid contained in the mixed solution containing the concentrated sulfuric acid and the siloxane-based hydrophobization agent. When the pH is less than the above range, an acidic component may be added separately. The acidic component to be added separately is not limited to sulfuric acid, and any mineral acids and organic acids can be used. As these mineral acids and organic acids, sulfuric acid, hydrochloric acid, hydrobromic acid, hydroiodic acid, thiocyanic acid, phosphoric acid, formic acid, acetic acid, trifluoroacetic acid, and the like are preferable, and among these, sulfuric acid and hydrochloric acid are more preferable.

There are various methods for adding the mixed solution consisting of concentrated sulfuric acid and a siloxane-based hydrophobization agent. For example, the mixed solution may be added to a reaction vessel in which a slurry is stirred at an appropriate speed using a funnel. When there is a possibility that the internal temperature exceeds a temperature range to be described later because of heat generation in mixing the concentrated sulfuric acid and the aqueous solution, it is preferable to adjust the addition rate by using a dropping funnel or the like.

The temperature at the time of the hydrophobization treatment is preferably 50 to 70°C, and more preferably 60 to 70°C. When the temperature exceeds this range, depending on the type of the hydrophobization agent and the hydrophilic organic solvent, these may be distilled off, and the progress of hydrophobization may be insufficient. When the reaction is performed at a temperature exceeding the above range, it is preferable to take a measure to suppress the distillation of the hydrophobization agent and the hydrophilic organic solvent using a cooling pipe.

The time required for the hydrophobization treatment varies depending on the specific surface area of the silica raw material, the type of the siloxane-based hydrophobization agent, the temperature, and the hydrophobicity of the intended silica powder. The hydrophobicity can be indicated as a degree of hydrophobicity (M value) with the methanol concentration at which the silica powder is suspended, and this can also be considered as an index indicating the degree of progress of the hydrophobic reaction. For example, 73 parts by mass of hexamethyldisiloxane is used with respect to 100 parts by mass of raw silica having a specific surface area of 900 to 1000 $m^2/g$, the treatment temperature is set to 60°C, and the time required to obtain hydrophobic silica having an M value of around 45 vol% is 1 hour.

<Treatment After hydrophobization>

Since the slurry after hydrophobization contains nonvolatile sulfuric acid, it is preferable to remove the acidic component, and a known method such as neutralization treatment or water passage washing can be employed. Among these, a method of adding a basic substance to perform a neutralization treatment is preferable. The addition of the basic substance causes the pH of the slurry to be brought into a state of exhibiting neutrality to weak acidity. Specifically, the pH of the slurry is preferably set to 1.0 to 7.5, and more preferably set to 1.5 to 7.0.

As the basic substance, any water-soluble substance can be used. Inorganic bases such as hydroxide salts, carbonate salts, hydrogen carbonate salts, and ammonia water, organic acid salts such as acetate salts, and the like can be used.

The neutralization treatment can be performed by maintaining the temperature at 35°C to 80°C. In this step, an acid-base neutralization reaction which is an exothermic reaction occurs, and thus the temperature can be set to this temperature range without performing heating. The time required for adding the basic substance may be appropriately set

depending on the temperature of the slurry, and is 0.5 hours to 1 hour.

Most of the salts can be removed by removing the aqueous layer generated by extracting the hydrophobic silica into a hydrophobic organic solvent after the neutralization treatment. Any hydrophobic organic solvent can be used for extraction of the hydrophobic silica, but a solvent having a relatively low boiling point, which is prepared to be distilled off at the time of drying, can be used. Hexane, heptane, nonane, decane, methyl ethyl ketone, toluene, and the like can be used, and hexane, heptane, decane, and toluene can be preferably used.

Salts remain in the hydrophobic silica dispersion obtained by the above-described operation. When porous silica or silica aerogel is used as the raw silica, salts remain also in the pores. When it is necessary to further remove the remaining salts, washing with water or an aqueous solution of alcohol is preferably performed on the hydrophobic organic solvent. This washing operation can be performed by a known method. To increase the washing efficiency, an aqueous solution of several tens of wt% of isopropyl alcohol is preferably used. In addition, it is preferable to set the temperature to a high temperature within a range not exceeding the boiling point of the hydrophobic organic solvent to improve the washing efficiency. The washing can be performed normally in the range of 45 to 70°C.

<Recovery and Drying of Hydrophobic Silica>

To obtain a hydrophobic silica powder, hydrophobic silica may be separated by filtration from the hydrophobic silica dispersion after the hydrophobic treatment and dried. The temperature at the time of drying is preferably a temperature equal to or higher than the boiling point of the solvent and equal to or lower than the decomposition temperature of the surface treatment agent. The drying is preferably performed under normal pressure or reduced pressure.

## EXAMPLES

Hereinafter, the present invention will be described more specifically with reference to Examples and Comparative Examples, but the present invention is not limited to these Examples at all.

<Evaluation Method>

The hydrophobic silica powders produced in Examples 1 to 4 and Comparative Examples 1 to 4 were tested for the following items.

(Carbon Content)

The carbon content and hydrophobicity of silica treated with the same siloxane-based hydrophobization agent are in a positive relationship. Using this, the carbon content was measured using an element analyzer (varioMICRO cube) manufactured by Elementar Japan K.K., and the carbon content was used as an index of hydrophobization treatment with silica surface hydrophobic groups.

(M Value)

The hydrophobic silica powder floats in water but is completely suspended in methanol. Using this, the M value measured by the following method was used as an index of the hydrophobization treatment with the silica surface hydrophobic groups. The silica powder that is suspended in water without addition of methanol by the following method is a hydrophilic silica powder, and the M value is 0. The silica powder having an M value of 1 or more is a hydrophobic silica powder, and it floats in water to which methanol is not added. The larger the M value, the more methanol is required for the silica powder to be suspended in water, indicating higher hydrophobicity.

The hydrophobic silica powder in an amount of 0.2 g was added to 50 ml of water in a beaker having a volume of 200 mL, and the mixture was stirred with a magnetic stirrer. Methanol was added thereto using a burette. The methanol was added dropwise with the time point at which the whole amount of the hydrophobic silica powder was suspended by being wetted with a solvent in the beaker as an end point. At this time, methanol was introduced into the solution through a tube so that the methanol did not directly touch the sample. The volume percentage of the methanol in the methanol-water mixed solvent at the end point was taken as the degree of hydrophobicity (M value).

$$\text{M value} = \text{methanol dropping amount}/(\text{methanol dropping amount} + 50\ \text{ml})$$

<Example 1>

Sodium silicate in an amount of 100 g was gradually added while 100 g of sulfuric acid was stirred with a stirring blade, whereby an aqueous silica sol was prepared. At this time, the pH was 2.9.

To 139 g of the aqueous silica sol prepared above, 129 g of heptane was added, and 1.5 g of sorbitan monooleate was added. The solution was stirred at 4600 rpm for 2.5 minutes using a homogenizer to form a W/O emulsion.

The obtained W/O emulsion was gelled at 70°C taking 60 minutes with stirring with a stirring blade. Subsequently, 71 g of isopropyl alcohol and 58 g of ion-exchanged water were added, and the O phase and the W phase were separated while being stirred with a stirring blade. Subsequently, 9.63 g of a 0.5 mol/L aqueous sodium hydroxide solution was added to the W phase. At this time, the pH of the W phase was 7.1. The gelled body was aged at 70°C for 10 minutes. The O phase was removed by decantation to recover the W phase. The silica concentration of the W phase was 4.2 wt%.

To 45.5 g of concentrated sulfuric acid, 7.7 g of hexamethyldisiloxane (HMDSO) as a siloxane-based hydrophobization agent was added, and the mixture was stirred for 5 minutes to obtain a mixed solution. This mixed solution was added to the above-described W phase, and a hydrophobization treatment was performed at 60°C for 15 minutes while stirring. The pH of the solution at the time of the hydrophobization treatment was 0.

After the hydrophobization treatment, 130 g of a 24% aqueous sodium hydroxide solution was added while stirring with a stirring blade to perform a neutralization treatment. The pH at this time was 2.0.

Subsequently, 90 g of heptane was added, the gelled body was extracted, the W phase was removed by decantation, and the O phase was recovered. The O phase was washed twice with 129 g of 55% isopropyl alcohol.

The silica slurry after washing was separated by filtration with a suction filter. The gelled body was dried by heating at -100 kPa and 150°C for 16 hours or more, whereby a hydrophobic silica powder was obtained. The hydrophobization conditions and physical properties of the obtained silica powder are shown in Table 1.

<Comparative Example 1>

The same operation as in Example 1 was performed until the step of aging the gelled body, and in the step of performing a hydrophobization treatment, 45.5 g of concentrated sulfuric acid and 7.7 g of hexamethyldisiloxane were separately added to the W phase, and the hydrophobization treatment was performed at 60°C for 15 minutes while stirring. The pH of the solution at the time of the hydrophobization treatment was 0.

After the hydrophobization treatment, 130 g of a 24% aqueous sodium hydroxide solution was added while stirring with a stirring blade to perform a neutralization treatment. The pH at this time was 2.0. Subsequently, 90 g of heptane was added, and an attempt was made to extract the gelled body, but the gelled body was not dispersed in heptane. The W phase was transferred to a funnel, the gelled body was separated by filtration, and 1500 g of pure water was added thereto to wash the salts. Subsequently, 300 g of isopropyl alcohol was added, then the resulting gelled body was dried by heating at -100 kPa and 150°C for 16 hours or more, whereby a hydrophobic silica powder was obtained. The hydrophobization conditions and physical properties of the obtained silica powder are shown in Table 1.

<Example 2>

The same operation as in Example 1 was performed except that the hydrophobization treatment time was 30 minutes. The hydrophobization conditions and physical properties of the obtained silica powder are shown in Table 1.

<Comparative Example 2>

The same operation as in Comparative Example 1 was performed except that the hydrophobization treatment was performed at 60°C for 30 minutes. The hydrophobization conditions and physical properties of the obtained silica powder are shown in Table 1.

<Example 3>

The same operation as in Example 1 was performed except that the hydrophobization treatment time was 60 minutes. The hydrophobization conditions and physical properties of the obtained silica powder are shown in Table 1.

<Comparative Example 3>

The same operation as in Comparative Example 1 was performed except that the hydrophobization treatment was performed at 60°C for 60 minutes. The hydrophobization conditions and physical properties of the obtained silica powder are shown in Table 1.

<Example 4>

The same operation as in Example 1 was performed except that the hydrophobization treatment time was 180 minutes. The hydrophobization conditions and physical properties of the obtained silica powder are shown in Table 1.

<Example 5>

Sodium silicate in an amount of 100 g was gradually added while 100 g of sulfuric acid was stirred with a stirring blade, whereby an aqueous silica sol was prepared. At this time, the pH was 2.9.

To 139 g of the aqueous silica sol prepared above, 129 g of heptane was added, and 1.5 g of sorbitan monooleate was added. The solution was stirred at 4600 rpm for 2.5 minutes using a homogenizer to form a W/O emulsion.

The obtained W/O emulsion was gelled at 70°C taking 60 minutes with stirring with a stirring blade. Subsequently, 71 g of isopropyl alcohol and 58 g of ion-exchanged water were added, and the O phase and the W phase were separated while being stirred with a stirring blade. Subsequently, 9.63 g of a 0.5 mol/L aqueous sodium hydroxide solution was added. At this time, the pH of the W phase was 7.1. The gelled body was aged at 70°C for 10 minutes. The O phase was removed by decantation to recover the W phase. Concentrated sulfuric acid in an amount of 33.9 g was added to the W phase. The silica concentration of the W phase after addition of concentrated sulfuric acid was 3.7 wt%.

To 11.6 g of concentrated sulfuric acid, 7.7 g of hexamethyldisiloxane (HMDSO) as a siloxane-based hydrophobization agent was added, and the mixture was stirred for 5 minutes to obtain a mixed solution. This mixed solution was added to the above-described W phase, and a hydrophobization treatment was performed at 60°C for 60 minutes while stirring. The pH of the solution at the time of the hydrophobization treatment was 0.

After the hydrophobization treatment, 130 g of a 24% aqueous sodium hydroxide solution was added while stirring with a stirring blade to perform a neutralization treatment. The pH at this time was 2.0.

Subsequently, 90 g of heptane was added, the gelled body was extracted, the W phase was removed by decantation, and the O phase was recovered. The O phase was washed twice with 129 g of 55% isopropyl alcohol.

The silica slurry after washing was separated by filtration with a suction filter. The gelled body was dried by heating at -100 kPa and 150°C for 16 hours or more, whereby a hydrophobic silica powder was obtained. The hydrophobization conditions and physical properties of the obtained silica powder are shown in Table 1.

<Example 6>

The same operation as in Example 1 was performed except that the siloxane-based hydrophobization agent was 7.7 g of octamethylcyclotetrasiloxane (D4), and the hydrophobization treatment time was 30 minutes. The hydrophobization conditions and physical properties of the obtained silica powder are shown in Table 1.

<Comparative Example 4>

The same operation as in Example 6 was performed until the step of aging the gelled body, and in the step of performing a hydrophobization treatment, 45.5 g of concentrated sulfuric acid and 7.7 g of octamethylcyclotetrasiloxane were separately added to the W phase, and the hydrophobization treatment was performed at 60°C for 30 minutes while stirring. The pH of the solution at the time of the hydrophobization treatment was 0.

After the hydrophobization treatment, 130 g of a 24% aqueous sodium hydroxide solution was added while stirring with a stirring blade to perform a neutralization treatment. The pH at this time was 2.0.

Subsequently, 90 g of heptane was added, and an attempt was made to extract the gelled body, but the gelled body was not dispersed in the O phase. The W phase was transferred to a funnel, the gelled body was separated by filtration, and 1500 g of pure water was added thereto to remove the salts. Subsequently, 300 g of isopropyl alcohol was added, then the resulting gelled body was dried by heating at -100 kPa and 150°C for 16 hours or more, whereby a hydrophobic silica powder composed of the spherical silica of the present invention was obtained. The hydrophobization conditions and physical properties of the obtained silica powder are shown in Table 1.

<Example 7>

The same operation as in Example 6 was performed except that the hydrophobization treatment time was 60 minutes. The hydrophobization conditions and physical properties of the obtained silica powder are shown in Table 1.

<Comparative Example 5>

The same operation as in Comparative Example 4 was performed except that the hydrophobization treatment

time was 60 minutes. As in Comparative Example 4, the gelled body after the hydrophobization treatment was not dispersed in heptane. The hydrophobization conditions and physical properties of the obtained silica powder are shown in Table 1.

<Example 8>

The same operation as in Example 6 was performed except that the hydrophobization treatment time was 120 minutes. The hydrophobization conditions and physical properties of the obtained silica powder are shown in Table 1.

<Comparative Example 6>

The same operation as in Comparative Example 4 was performed except that the hydrophobization treatment time was 120 minutes. As in Comparative Example 4, the gelled body after the hydrophobic treatment was not dispersed in heptane. The hydrophobization conditions and physical properties of the obtained silica powder are shown in Table 1.

<Example 9>

To 60 g of hydrophilic silica powder (specific surface area: 4.2 $m^2/g$) produced by a sol-gel method, 188 g of pure water and 60 g of isopropyl alcohol were added, and then 41.5 g of concentrated sulfuric acid was added to adjust a slurry having a silica concentration of 17.2 wt%.

To 4.0 g of concentrated sulfuric acid, 0.4 g of hexamethyldisiloxane as a siloxane-based hydrophobization agent was added, and the mixture was stirred for 5 minutes to obtain a mixed solution. This mixed solution was added to the above-described slurry, and a hydrophobization treatment was performed at 60°C for 60 minutes while stirring. The pH of the solution at the time of the hydrophobization treatment was 0. After the hydrophobization treatment, 130 g of a 24% aqueous sodium hydroxide solution was added while stirring with a stirring blade to perform a neutralization treatment. The pH at this time was 2.0.

Subsequently, 90 g of heptane was added, the hydrophobic silica was extracted, the W phase was removed by decantation, and the O phase was recovered. The silica was separated from the O phase by filtration, and dried by heating at -100 kPa and 150°C for 16 hours or more, whereby a hydrophobic silica powder was obtained. The hydrophobization conditions and physical properties of the obtained silica powder are shown in Table 1.

<Comparative Example 7>

The same operation as in Example 9 was performed except that in the step of performing a hydrophobization treatment, 5 g of concentrated sulfuric acid and 0.4 g of hexamethyldisiloxane were separately added to the W phase, and the hydrophobization treatment was performed at 60°C for 60 minutes while stirring. The hydrophobization conditions and physical properties of the obtained silica powder are shown in Table 1.

[Table 1]

Table 1. Hydrophobization condition and physical property of silica powder

| | Hydrophobization condition | | | Physical property of silica powder | |
|---|---|---|---|---|---|
| | Siloxane-based hydrophobization agent | Mixing of concentrated sulfuric acid and hydrophobization agent before addition | Treatment time (min) | Carbon content (%) | M value (vol%) |
| Example 1 | HMDSO | Mixed before addition (5.9 times by mass)* | 15 | 6.3 | 39 |
| Comparative Example 1 | HMDSO | None | 15 | 2.5 | 0 |
| Example 2 | HMDSO | Mixed before addition (5.9 times by mass) | 30 | 7.5 | 44 |
| Comparative Example 2 | HMDSO | None | 30 | 6.2 | 34 |
| Example 3 | HMDSO | Mixed before addition (5.9 times by mass) | 60 | 7.5 | 47 |

(continued)

| Table 1. Hydrophobization condition and physical property of silica powder | | | | | |
|---|---|---|---|---|---|
| | Hydrophobization condition | | | Physical property of silica powder | |
| | Siloxane-based hydrophobization agent | Mixing of concentrated sulfuric acid and hydrophobization agent before addition | Treatment time (min) | Carbon content (%) | M value (vol%) |
| Comparative Example 3 | HMDSO | None | 60 | 6.6 | 36 |
| Example 4 | HMDSO | Mixed before addition (5.9 times by mass) | 180 | 7.5 | 47 |
| Example 5 | HMDSO | Mixed before addition (1.5 times by mass) | 60 | 7.5 | 46 |
| Example 6 | D4 | Mixed before addition (5.9 times by mass) | 30 | 5.0 | 15 |
| Comparative Example 4 | D4 | None | 30 | 1.9 | 0 |
| Example 7 | D4 | Mixed before addition (5.9 times by mass) | 60 | 6.3 | 35 |
| Comparative Example 5 | D4 | None | 60 | 2.4 | 0 |
| Example 8 | D4 | Mixed before addition (5.9 times by mass) | 120 | 7.7 | 42 |
| Comparative Example 6 | D4 | None | 120 | 3.6 | 0 |
| Example 9 | HMDSO | Mixed before addition (10 times by mass) | 60 | 0.055 | 45 |
| Comparative Example 7 | HMDSO | None | 60 | 0.035 | 27 |
| *: The number in brackets indicates the amount of concentrated sulfuric acid to hydrophobization agent | | | | | |

## Claims

1. A method for producing a hydrophobic silica powder, the method comprising hydrophobizing a silica powder using a mixed solution consisting of concentrated sulfuric acid and a siloxane-based hydrophobization agent.

2. The method for producing a hydrophobic silica powder according to claim 1, wherein the concentrated sulfuric acid has a mass of 1.5 times to 10 times a mass of the siloxane-based hydrophobization agent.

3. The method for producing a hydrophobic silica powder according to claim 1 or 2, wherein the siloxane-based hydrophobization agent is at least one selected from hexamethyldisiloxane, octamethyltrisiloxane, decamethyltetrasiloxane, dodecamethylpentasiloxane, tetradecamethylhexasiloxane, methylphenyl silicone oil, hexamethylcyclotrisiloxane, octamethylcyclotetrasiloxane, decamethylcyclopentasiloxane, dodecamethylcyclohexasiloxane, tetradecamethylcycloheptasiloxane, hexadecamethylcyclooctasiloxane, octadecamethylcyclononasiloxane, and eicosamethylcyclodecasiloxane.

4. The method for producing a hydrophobic silica powder according to claim 3, wherein the siloxane-based hydrophobization agent is at least one selected from hexamethyldisiloxane, octamethyltrisiloxane, hexamethylcyclotrisiloxane, octamethylcyclotetrasiloxane, and decamethylcyclopentasiloxane.

**5.** A hydrophobization treatment agent consisting of concentrated sulfuric acid and a siloxane-based hydrophobization agent.

## INTERNATIONAL SEARCH REPORT

International application No.
**PCT/JP2024/010485**

**A. CLASSIFICATION OF SUBJECT MATTER**

***C01B 33/18***(2006.01)i
FI: C01B33/18 C

According to International Patent Classification (IPC) or to both national classification and IPC

**B. FIELDS SEARCHED**

Minimum documentation searched (classification system followed by classification symbols)

C01B33/00-33/193

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 8-152736 A (MITSUBISHI MATERIALS CORPORATION) 11 June 1996 (1996-06-11)<br>paragraphs [0016], [0018], [0026], [0030] | 1-2, 5<br>3-4 |
| Y | JP 2005-37909 A (TOKUYAMA CORPORATION) 10 February 2005 (2005-02-10)<br>paragraphs [0081]-[0087] | 3-4 |
| Y | JP 2005-154222 A (TOKUYAMA CORPORATION) 16 June 2005 (2005-06-16)<br>claims, paragraphs [0049]-[0053] | 3-4 |
| A | JP 54-11899 A (DEUTSCHE GOLD-UND SILBER-SCHEIDEANSTALT VORMALS ROESSLER) 29 January 1979 (1979-01-29)<br>entire text | 1-5 |
| A | JP 2005-532979 A (DOW CORNING CORPORATION) 04 November 2005 (2005-11-04)<br>entire text | 1-5 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/010485**

| Patent document cited in search report | Publication date (day/month/year) | Patent family member(s) | Publication date (day/month/year) |
|---|---|---|---|
| JP 8-152736 A | 11 June 1996 | (Family: none) | |
| JP 2005-37909 A | 10 February 2005 | (Family: none) | |
| JP 2005-154222 A | 16 June 2005 | (Family: none) | |
| JP 54-11899 A | 29 January 1979 | GB 002001303 A<br>entire text<br>DE 002729244 A1<br>FR 002395952 A1 | |
| JP 2005-532979 A | 04 November 2005 | US 006613139 B1<br>entire text<br>KR 10-2005-0025620 A<br>CN 001662444 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012057086 A
- JP 2018177620 A